# EUROPEAN PATENT SPECIFICATION

(11) **EP 3 792 110 B1**
(45) Date of publication and mention of the grant of the patent: **27.04.2022**
(21) Application number: 20195561.4
(22) Date of filing: 10.09.2020
(51) Int. Cl.: B60P 7/08, B60P 7/10, B60P 3/055

(54) **SUPPORT STRUCTURE AND RELATED FIXING SYSTEM OF PALLETS OR PALLET-BASED BASKETS**
UNTERSTÜTZUNGSSTRUKTUR UND VERWANDTES BEFESTIGUNGSSYSTEM VON PALETTEN ODER KORBEN-AUF-PALETTENBASIS
STRUCTURE DE SOUTIEN ET SYSTÈME DE FIXATION ASSOCIÉ DES PALETTES OU PANIERS-À-PALETTES

(30) Priority: 10.09.2019 IT 201900015986
(43) Date of publication of application: 17.03.2021
(73) Proprietor: Cattaneo, Ivan, 23845 Costa Masnaga LC (IT)
(72) Inventor: Cattaneo, Ivan, 23845 Costa Masnaga LC (IT)
(74) Representative: Barbaro, Gaetano

(56) References cited:
- EP-A1- 1 733 955
- EP-A2- 1 022 185
- EP-B1- 1 022 185
- EP-B1- 1 733 955
- US-A- 3 451 573

## Description

### TECHNICAL FIELD

The present disclosure refers in general to the transport of objects and more particularly to a support structure that may be installed on vehicles suitable for transporting goods as well as a relative fixing system for pallet-based baskets or pallets for transport on vehicles and a relative method for fixing pallets or pallet-based baskets.

### BACKGROUND

Setting up a vehicle for the transport of hazardous materials is not a simple operation, as it is necessary to combine the needs of comfort and efficiency with the most stringent European regulations for road transport and storage of hazardous substances. In order to be reliable, safe and in line with current legislation, the correct securing of loads for road transport must take into consideration numerous variables, which include for example the type of goods to be transported, the packaging, the arrangement of weights inside the compartment.

Obligations and laws regarding load securing are defined to protect the safety of drivers of heavy vehicles and, in a broader perspective, to safeguard all those traveling on the road. A correct positioning and securing of the load is therefore imperative to ensure the safety of drivers and avoid any damage to the goods and containers.

The road transport of dangerous goods, thus also of gases, is currently regulated by the ADR agreement (Accord Dangereuses Route or also Agreement Dangerous Road) which establishes that, in order to be able to transport containers of compressed and liquefied gases (cylinders and dewars), the following conditions must be met, in particular:
- In the case of cylinders it is necessary that they are well fixed on the vehicle or inside metal cages or blocked on special saddles applied on the loading surface;
- Cylinders and dewars (mobile tanks) must be securely fastened so that they cannot roll or fall.

Basically, the cylinders must be fixed on the vehicle so that, in the event of sudden braking, hairpin bends or accidents, they do not get damaged, do not damage other goods and do not create risks for people.

A currently widespread solution is represented by the use of special safety belts, to be fixed to sufficiently stable elements of the vehicle. The containers must be transported in an upright position if possible and, if lying down, must be arranged perpendicular to the direction of travel.

With particular reference to the transport of gas cylinders, they are normally inserted into baskets and fixed therein by means of belts. The baskets are then loaded onto the truck and anchored to the floor and sides of the truck with other straps. To unload even just part of the load when making a delivery, operators must unfasten the straps that anchor one or more baskets to the truck, unload the cylinders to be delivered, then tighten the straps to anchor again the emptied basket(s), even partially, on the truck platform and sides.

The tightening operations of the belts are quite long and it is not uncommon for them to be carried out with little care by the personnel in charge, in order to be able to resume the journey quickly to make the next delivery as soon as possible. In addition, the straps, which must be tightened with ratchets, wear out quickly and can be cut. Consequently, there is a danger that the truck will restart again with the cylinders not properly anchored, with serious safety hazards. US 3 451 573 A discloses the preamble of independent claim 1.

### SUMMARY

In order to obviate these drawbacks at least in part, a support structure has been provided which can be mounted on vehicles suitable for the safe transport of goods placed on a pallet or on pallet-based basket. The support structure, defined in claim 1, can be installed on the frame of a truck or trailer body and comprises:
a rigid platform defining a supporting surface for pallets or baskets with a pallet base;
a rigid footboard fixed longitudinally to the platform in a substantially central position which subdivides the supporting surface into two lanes, in which the platform is shaped so as to define two substantially specular grooves with respect to a central longitudinal plane of the supporting surface, each groove being raised with respect to a respective lane of the footboard;
two side beams fixed longitudinally on the outer sides of the platform, each having:
   - a substantially C-shaped section suitable for coupling to a vehicle frame,
   - holes arranged in a row on the back of the C-shaped section that remain exposed on the sides of the vehicle when the beam is attached to its frame.

A fixing system of this disclosure comprises the support structure and at least one cross beam having:
- a head plate with fixing holes, configured to abut against the back of the C-section of the side beams with the fixing holes superimposed on corresponding holes in the side beams;
- a stem which rises substantially perpendicularly from the head plate;
- a free end located on one end of the stem opposite the head plate, configured to be housed in a groove in the footboard.

Also disclosed are a vehicle having such a support structure and a relative method of fixing pallets or baskets with a pallet base on the vehicle.

Further embodiments are defined in the attached claims.

### BRIEF DESCRIPTION OF THE DRAWINGS

Figure 1 shows a supporting structure of this disclosure.
Figure 2 shows modules to be interlocked to each other to make a platform for the support structure of Figure 1.
Figures 3 and 4 are sectional views from different points of view of a platform fixed to a platform of a support structure of Figure 1.
Figures 5 and 6 are detailed views of the support structure of Figure 1 to highlight the holes in the side beams.
Figure 7 represents a longitudinal beam of the support structure of Figure 1.
Figure 8 is a detail view of the side beam of Figure 7.
Figure 9 shows a cross beam that can be fixed to the support structure of Figure 1.
Figure 10 is an assembly view of a fixing system of this disclosure.
Figures 11, 12 and 13 are detail views of a fixing system of this disclosure taken from different points of view to illustrate the positioning of the cross beam of Figure 9.
Figure 14 illustrates a truck with a fixing system of this disclosure and with four baskets locked to it.
Figure 15 is an enlarged view of a detail of the fixing system of Figure 14.
Figure 16 is a sectional view of a detail of the fixing system of Figure 14.
Figures 17a, 17b and 17c are photographs of baskets with a pallet base currently used for the transport of gas cylinders and tanks.
Figure 18 shows a trailer with a fixing system of this disclosure loaded with cylinder baskets.
Figure 19 shows a phase of the loading / unloading operation of a basket on the trailer of figure 18.
Figure 20 shows a vehicle container which can be internally equipped with the support structure of this disclosure.

### DETAILED DESCRIPTION

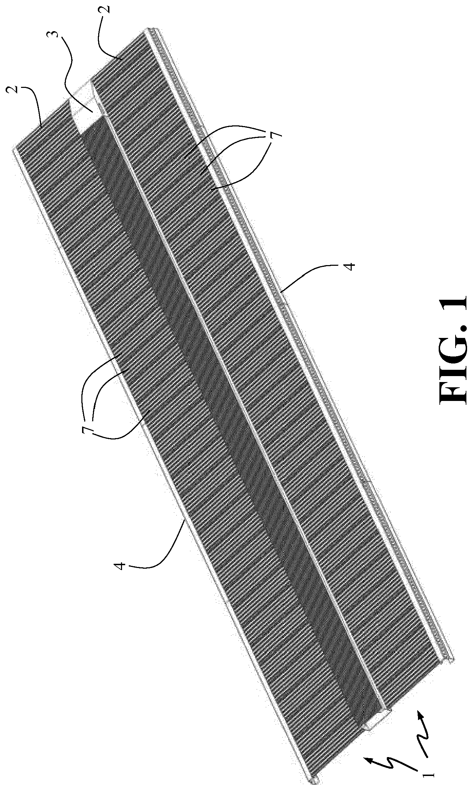

A support structure for vehicles suitable to the safe transport of baskets containing cylinders filled with gas or other goods placed on a pallet base is illustrated in figure 1. It has a platform 1 longitudinally divided into two lanes 2 separated by a raised footboard 3 and perforated longitudinal beams 4 arranged longitudinally to the sides of the platform 1.

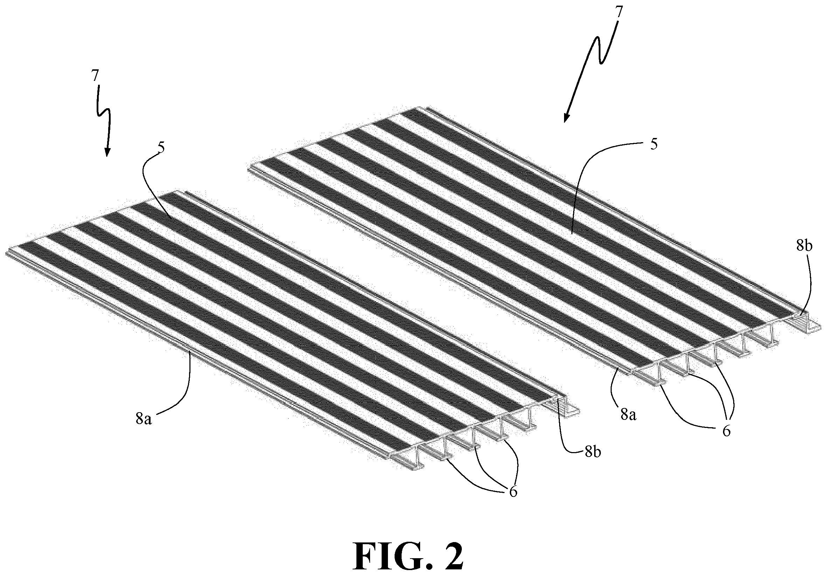

Conveniently, the platform 1 will be made as shown in Figure 2 with a slab 5 placed on beams 6 which support it, so as to stably support, during loading and unloading, the weight of baskets containing cylinders full of gas or more generally of goods placed on a pallet base.

The slab 5 can conveniently be a plate of extruded aluminium or steel or other rigid material, for example with a thickness of from 30 mm to 40 mm. According to one aspect, the platform 1 can be realized by joining together several identical modules 7 as those shown in Figure 2 by means of special joints 8a, 8b made on opposite edges of the modules 7, up to reach the desired length.

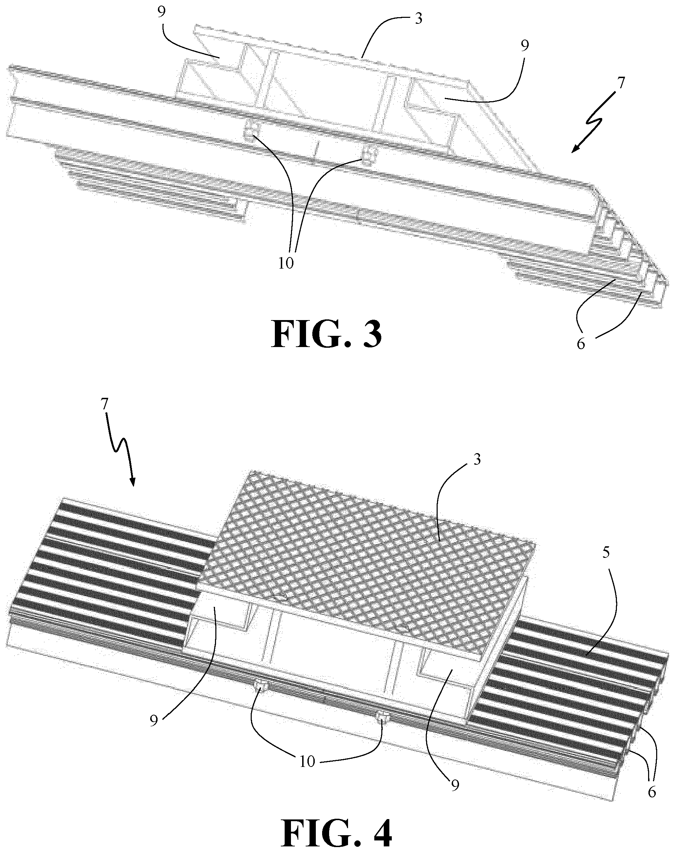

The footboard 3 in relief, shown in detail in figures 3 and 4, has a cross section that defines two grooves 9 specular in relief with respect to the platform 1 and which extend from one end to the other end substantially for the entire length of support structure.

In the example shown in Figures 3 and 4, the platform 3 is fixed to the platform 1 by means of bolts 10, however it can also be fixed for example by welding it the base to the platform 1.

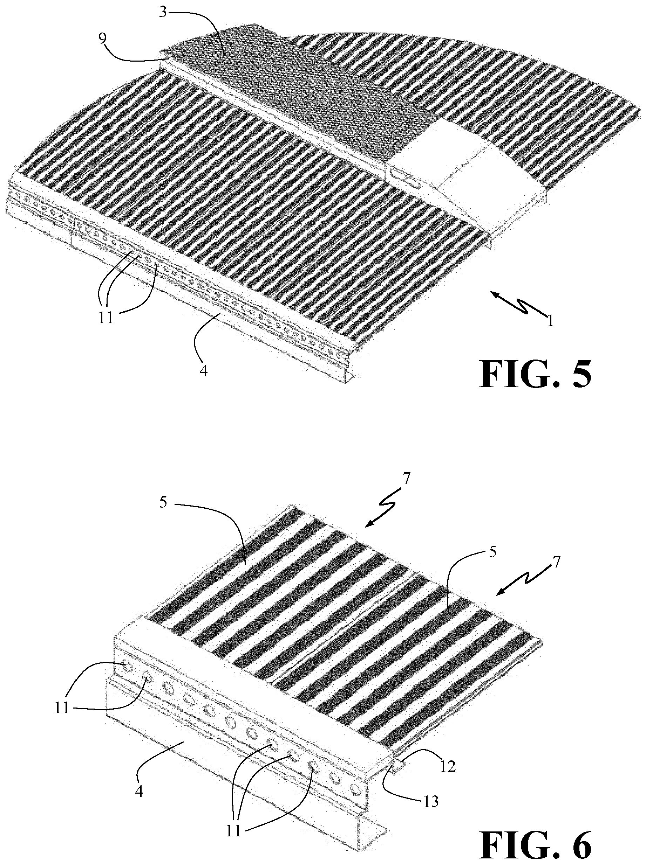

Longitudinally to the platform 1 and to its sides, which correspond to the right and left sides of the vehicle, side beams 4 are fixed in a mirror fashion, as shown in the assembly view of Figure 1 and in the detail views of Figures 5 and 6, each having at least one row of holes 11 on the back, accessible to an operator, which define as many fixing positions for bolts.

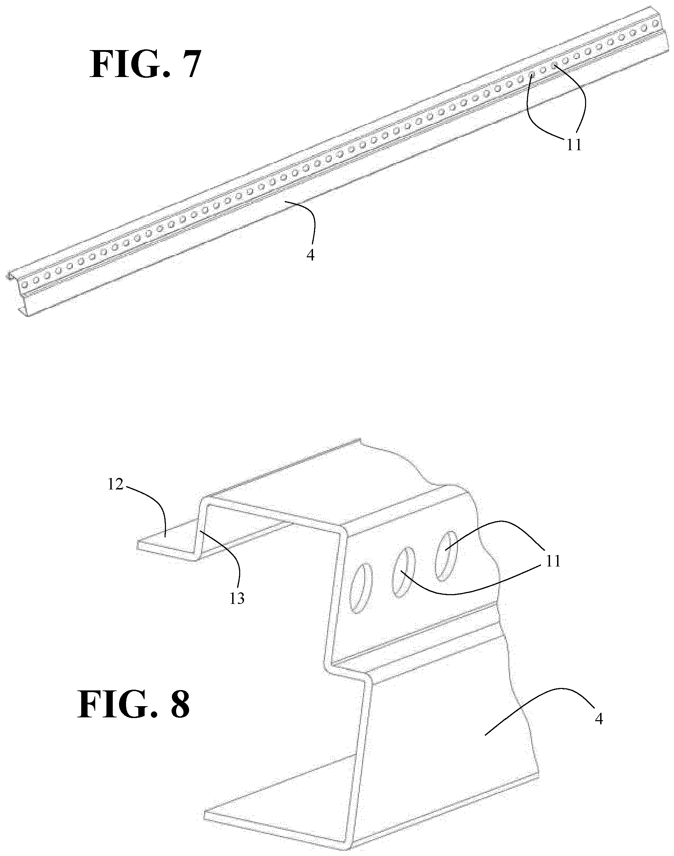

According to an optional aspect, illustrated in Figure 7 and in the detail view of Figure 8, the longitudinal beams 4 have a substantially C-shaped section, so as to hook onto the vehicle frame leaving the holes 11 exposed on the sides of the vehicle.

According to an optional aspect shown in Figure 8, each side beam 4 has a longitudinal edge folded so as to define a base 12, on which the platform 1 rests and is fastened, and a step which defines an abutment wall 13 so that the platform 1 cannot move transversely.

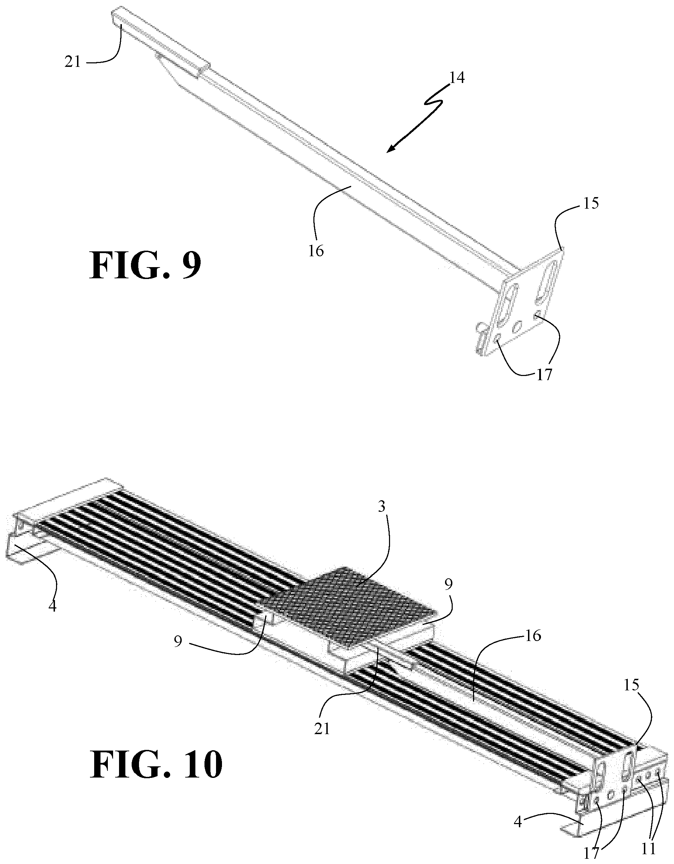

The so realized support structure can be mounted on a vehicle, for example a truck or a railway wagon or a trailer, to detach loads in a simple and rapid manner and to secure the loads in a sturdy and easily repeatable manner. Thanks to the presence of holes 11 on the back of the side beams 4 and the longitudinal groove 9 defined by the footboard 3, it is possible to realize a system for securing loads comprising the support structure and at least one cross-beam 14 of the type shown in Figure 9, substantially comprising a head plate 15 and a stem 16 . The head plate 15 defines an abutment surface against the back of the C- shaped side beams 4 and has fixing holes 17 arranged in such a way as to be engaged by bolts inserted in corresponding holes 11 of the side beams 4.

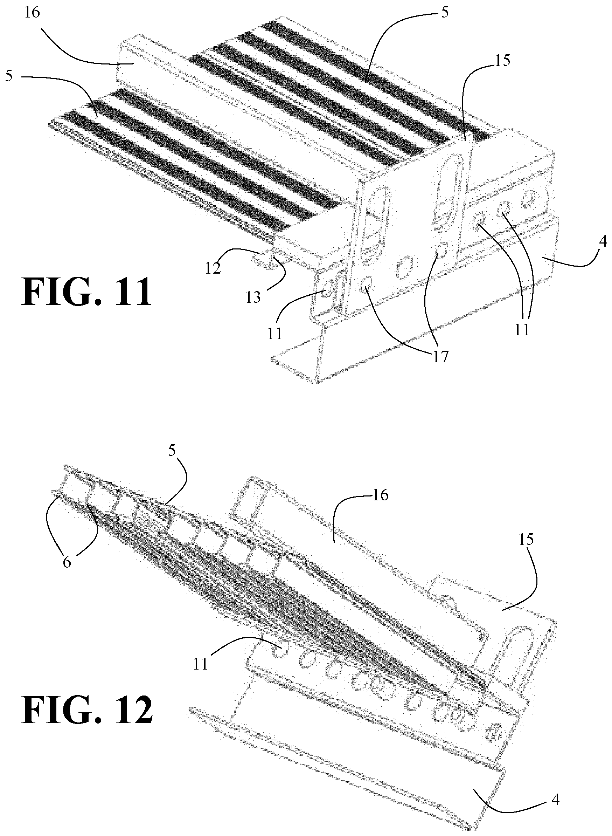

The fixing system of the present disclosure is shown in the assembly view of Figure 10 and in the detail views of Figures 11, 12 and 13. The head plate 15 of the cross beam 14 may be placed against the back of a C-shaped side beam 4 and fixed to it by means of bolts which engage the fixing holes 17 and corresponding holes 11 of the side beam 4. When the head plate 15 is bolted to the side beam 4, the stem 16 is suspended above the floor 1 in the transverse direction and the free end 21 of the stem 16 is inserted into the groove 9 of the footboard 3. When the cross beam 14 is fixed in this way, the stem 16 cannot rotate around a longitudinal axis to the floor 1, since the free end 21 is locked in the groove 9, and cannot translate parallel to itself or rotate around an axis perpendicular to the platform 1 because the head plate 15 is bolted to the side beam 4, which is in turn fixed to the platform 1.

According to an optional aspect, to prevent the head plate 15 of the cross member 14 from protruding with respect to the C-shaped side beam 4, the back of the side beam 4 is provided with a longitudinal recess shaped as shown in Figures 8, 10, 11, along which the fixing holes 11 are made, so that the head plate 15 of the cross member 14 bolted to the C-shaped side beam 4 is aligned with the back of the side beam 4 itself and does not protrude from it.

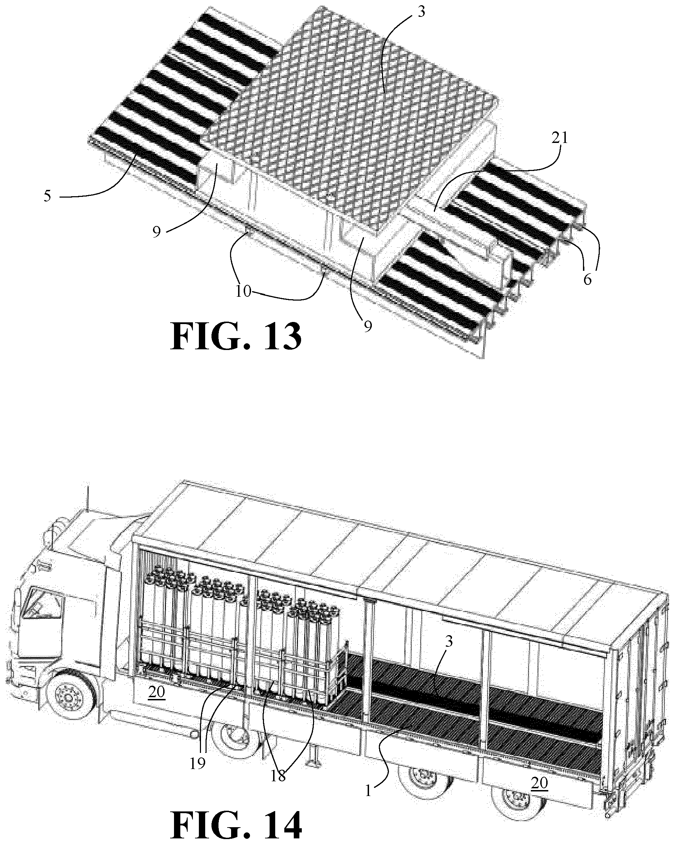

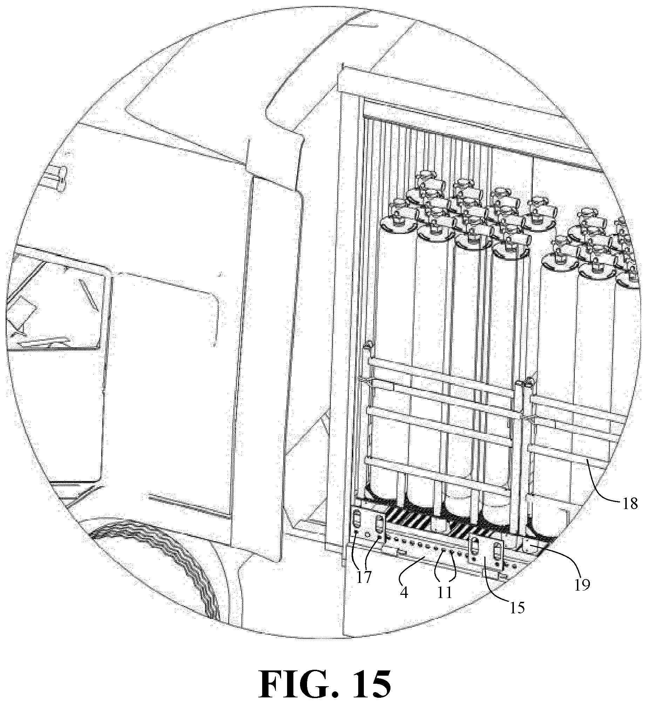

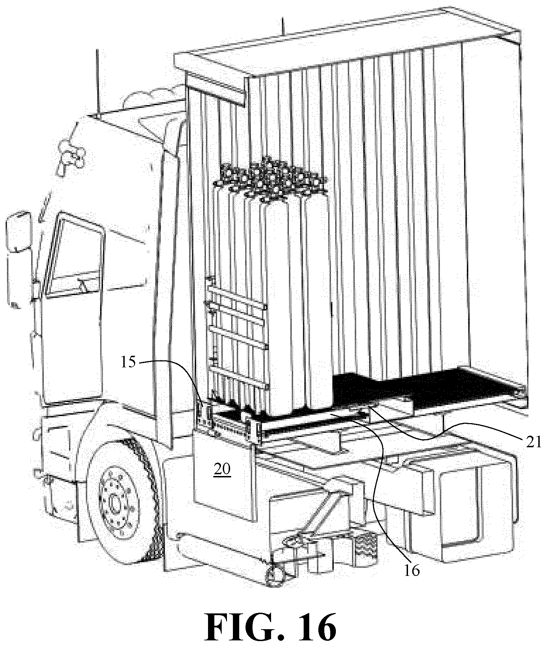

A truck with the fixing system of this disclosure attached to the chassis of the vehicle container and with four baskets 18 containing cylinders is shown in Figure 14. The cylinders are anchored together in the relative basket 18 and each basket 18 is locked to relative cross beams 14 of the fixing system, as can be better appreciated in the enlarged view of figure 15. In the sectional view of Figure 16 it is noted that the stem 16 of the cross beams 14 is tucked into the pallet base 19 of the basket 18, for which the basket 18 is locked and remains in place even if the vehicle, in case of accident, topples sideways.

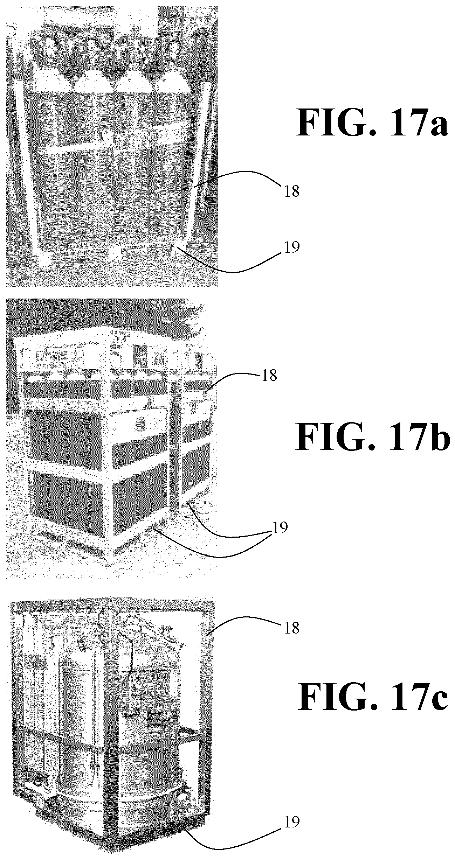

The described fixing system can be used for the transport of goods packed on pallets as well as of baskets 18 for the transport of cylinders for compressed or liquefied gas, as it takes advantage of the pallet base 19 which is present in all the pallets and baskets for the transport of goods. The photographs shown in figures 17a-c show different baskets 18 of the type currently in use for carrying cylinders (figures 17a-b) and tanks (figure 17c): they are transportable with the fixing system of this disclosure as they have a pallet base 19 to be forked and moved by forklifts.

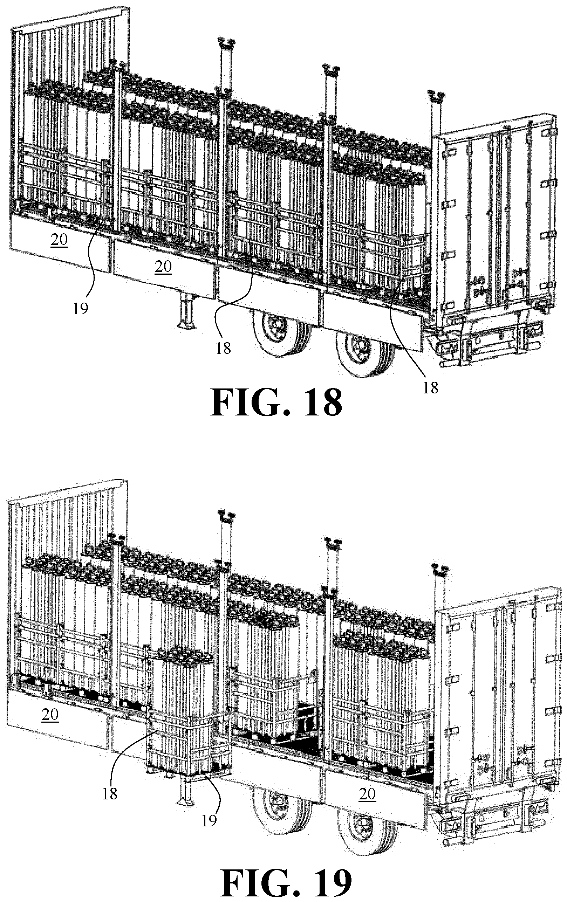

The fixing system of this disclosure can be mounted on the frame of a trailer with sidewalls 20, as shown in Figure 18, to stow baskets 18 filled with gas cylinders. Thanks to the fixing system of this disclosure, the baskets 18 are locked directly to the platform 1 and are no longer fixed to the sides 20 of the vehicle, which therefore can be opened without the risk of making the goods fall. In order to free a single basket, operators simply have to:
- overturn the sidewalls 20 of the trailer or truck to access the load from a side;
- unscrew the bolts of the cross beams 14 which stop the basket 18 to be accessed;
- bring the basket 18 of interest down from the platform 1 of the trailer or truck using a forklift truck, as shown in figure 19.

Once the cylinders to be delivered have been removed from the basket 18, the vehicle is loaded through the following operations:
- the cylinders remaining in the basket 18 are bound in the usual way;
- the basket 18 is placed back on the platform 1, for example with the forklift truck;
- the stem 16 of the crossbars 14 is put in the base pallet 19;
- the basket 18 is locked by bolting the cross beams 14 to the side beam 4;
- the sidewalls are closes 20.

As can be immediately understood, the loading/unloading operations of the goods are simplified and the fixing to the platform 1 of an unloaded basket 18 takes very little time and is always carried out with the highest safety standards, as the operator only has to tighten the bolts.

The fact that the platform 3 is in relief means that between the two lanes 2 into which the platform 1 is divided there is a walkable surface that can be walked on by an operator to inspect the whole load and to access each single basket 18.

The described fixing system can be equipped with an electrical control device in order to check, from the driver's cab of the vehicle, the correct fastening of the load. This electrical equipment can be configured to monitor, through simple devices such as switches, shunts, switches, etc. powered by low voltage electric current, with its own power supply and / or directly connected to the vehicle electrical system, points of contact between each basket 18 and the platform 1 as well as the insertion and correct fastening of the cross beams 14 which block the baskets 18. For example, such electrical equipment could provide for the switching on of an indicator light when a relative cross beam 14 is not correctly inserted in the pallet base 19 of a basket 18 and firmly fixed to the side beam 4. In this way, an operator close to the vehicle and / or in the driver's cab will be able to check the perfect positioning of the basket 18 and its locking and will have a visual indication to immediately identify the basket 18 not correctly fixed to the vehicle.

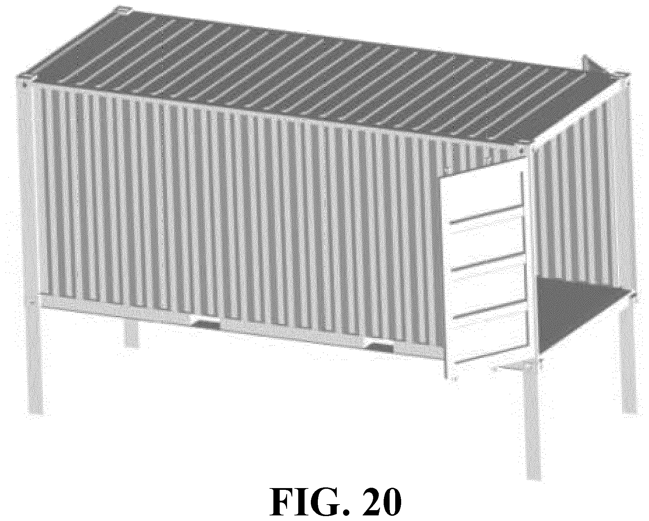

The fixing system of this disclosure can also be arranged inside a container, for example of the type illustrated in Figure 20, for road or rail transport. Even when the container is removed from the vehicle and is "parked" supported by props, as shown in the figure, the load contained in it is firmly locked and remains practically still during the loading / unloading operations from a truck trailer .

## Claims

1. A support structure, comprising:
a rigid platform (1) defining a supporting surface configured to support pallets or baskets with a pallet base;
a rigid footboard (3) fixed longitudinally to said platform (1) in a substantially central position and dividing said supporting surface into two lanes (2) separated by the footboard (3),
**characterised in that** said footboard (3) is shaped so as to define two grooves (9) substantially specular with respect to a median longitudinal plane of the supporting surface, each groove (9) of said grooves being raised with respect to a respective lane (2) of said two lanes;
two longitudinal beams (4) fixed longitudinally on the outer sides of said platform (1), wherein each longitudinal beam (4) of said longitudinal beams has:
- a substantially C-shaped section suitable for hooking to a vehicle frame, and
- a plurality of holes (11) arranged in a row on a back of said C-shaped section, said holes (11) remaining exposed on sides of said vehicle when the beam is hooked to said vehicle frame.

2. The support structure according to claim 1, wherein each beam (4) of said beams has:
- a longitudinal edge folded so as to define a base (12) suitable for supporting said platform (1), and
- a step which defines an abutment wall (13) for said platform (1) so as to hinder transverse movements of the platform (1) when it rests on said base (12).

3. The support structure according to one of claims 1 and 2, wherein said platform (1) comprises a plurality of identical modules (7) coupled to each other, each module (7) of said plurality of modules comprising:
- a slab (5) defining complementary interlocking elements (8a, 8b) at opposite edges of the slab (5), said complementary interlocking elements (8a, 8b) being configured to engage in corresponding complementary interlocking elements (8a, 8b) of a slab (5) of an adjacent module (7),
- rigid beams (6) which support said slab (5).

4. The support structure according to one of claims 1 to 3, in which said footboard (3) is bolted over the platform (1).

5. A fixing system of pallets or pallet-based baskets, comprising:
a support structure according to one of claims 1 to 4;
at least one cross beam (14) having:
- a head plate (15) with fixing holes (17), configured to abut against the back of the C-shaped section of said longitudinal beams (4) with the fixing holes (17) superimposed on corresponding holes of the plurality of holes (11), of the longitudinal beams, arranged in a row;
- a stem (16) which rises substantially perpendicularly from said head plate (15);
- a free end (21) located on one end of said stem (16) opposite to said head plate (15), configured to be housed in a groove (9) of said grooves of the footboard (3).

6. A vehicle for transporting pallets or baskets with a pallet base, comprising:
a frame of a vehicle container;
a support structure according to one of claims 1 to 4, wherein the longitudinal beams (4) of the support structure are hooked to the frame of the vehicle container.

7. The vehicle according to claim 6, comprising an electrical control apparatus comprising electrical devices configured:
- to detect points of contact between a pallet or a basket (18) with a pallet base (19) and the platform (1) of the support structure, or
- to detect the presence of a cross beam (14) bolted to a longitudinal beam (4) of the support structure.

8. A method of fixing pallets or pallet-based baskets on the transport vehicle according to claim 6 or 7, comprising the following operations:
placing at least one pallet or basket (18) with pallet base (19) on the platform (1) of said vehicle support structure;
providing at least one cross beam (14) having:
- a head plate (15) with fixing holes (17), configured to abut against the back of the C-shaped section of said longitudinal beams (4) of said vehicle support structure with the fixing holes (17) superimposed on corresponding holes of the plurality of holes (11), of longitudinal beams, arranged in a row,
- a stem (16) which rises substantially perpendicularly from said head plate (15),
- a free end (21) located on one end of said stem (16) opposite to said head plate (15), configured to be housed in a groove (9) of said grooves of the footboard (3) of said structure vehicle support;
inserting the stem (16) of at least one cross beam (14) in the pallet base (19) so as to hinder movements of the pallet base (19) longitudinally to the platform (1), positioning the head plate (15) against the back of the C-section of a longitudinal beam (4) of said longitudinal beams, with the fixing holes (17) of the cross beam superimposed on corresponding holes (11) of the longitudinal beam (4), and with a free end (21) of the cross beam (14 ) housed in a groove (9) of the footboard (3) of said vehicle support structure;
bolting the head plate (15) against the back of the C-section of the longitudinal beam (4).

## Patentansprüche

1. Eine Unterstützungsstruktur, umfassend:
- eine starre Plattform (1), welche eine Stützfläche bildet, die dazu ausgelegt ist, Paletten oder Körbe mit einem Palettensockel zu unterstützen;
- einen starren Laufsteg (3), welcher an der besagten Plattform (1) in einer substantiell zentralen Position in Längsrichtung festgelegt ist und die Stützfläche in zwei Streifen (2) teilt, die durch den Laufsteg (3) voneinander getrennt sind,
**dadurch gekennzeichnet, dass** der besagte Laufsteg (3) derart gestaltet ist, dass er zwei Nuten (9) begrenzt, die substantiell spiegelbildlich sind bezüglich einer Längsmittelebene der Stützfläche, wobei jede Nut (9) der besagten Nuten bezüglich einem zugeordneten Streifen (2) der besagten zwei Streifen erhöht ist;
- zwei Längsträger (4), welche in Längsrichtung an den Außenseiten der besagten Plattform (1) befestigt sind, wobei jeder Längsträger (4) der besagten Längsträger aufweist:
- einen substantiell C-förmigen Abschnitt, der zum Festhaken an einem Fahrzeugrahmen geeignet ist, und
- eine Mehrzahl von Löchern (11), die in einer Reihe an einer Rückseite des besagten, C-förmigen Abschnitts angeordnet sind, wobei die besagten Löcher (11) an den Seiten des besagten Fahrzeugs zugänglich bleiben, wenn der Träger an dem besagten Fahrzeugrahmen festgehakt ist.

2. Die Unterstützungsstruktur nach Anspruch 1, wobei jeder Längsträger (4) der genannten Träger aufweist:
- eine Längskante, die abgekantet ist und dadurch eine Unterlage (12) bildet, welche dazu geeignet ist, die besagte Plattform (1) zu stützen, und
- eine Stufe, die eine Anlagewand (13) für die besagte Plattform (1) begrenzt, so dass Querbewegungen der Plattform (1) verhindert werden, wenn sie auf der besagten Unterlage (12) liegt.

3. Die Unterstützungsstruktur gemäß einem der Ansprüche 1 und 2, wobei die besagte Plattform (1) eine Mehrzahl von identischen Modulen (7) umfasst, welche miteinander gekoppelt sind, wobei jedes Modul (7) der besagten Mehrzahl von Modulen umfasst:
- eine Platte (5), welche komplementär ineinandergreifende Elemente (8a, 8b) an entgegengesetzten Kanten der besagten Platte (5) definiert, wobei die besagten, komplementär ineinandergreifenden Elemente (8a, 8b) derart ausgelegt sind, dass sie in die entsprechenden, komplementäre ineinandergreifenden Elemente (8a, 8b) einer Platte (5) eines angrenzenden Moduls (7) eingreifen,
- starre Balken (6), welche die genannte Platte (5) stützen.

4. Die Unterstützungsstruktur gemäß einem der Ansprüche 1 bis 3, bei welcher der besagte Laufsteg (3) oberhalb der Plattform (1) angeschraubt ist.

5. Ein Befestigungssystem für Paletten oder Körbe mit einem Palettensockel, umfassend:
- eine Unterstützungsstruktur gemäß einem der Ansprüche 1 bis 4;
- mindestens einen Querträger (14), umfassend:
- eine Kopfplatte (15) mit Befestigungslöchern (17), ausgelegt, um an der Rückseite des C-förmigen Abschnittes der besagten Längsträger (4) anzustoßen, wobei die Befestigungslöcher (17), welche entsprechende Löcher der Mehrzahl von Löchern (11) der Längsträger überlagern, in einer Reihe angeordnet sind;
- eine Stange (16), die sich über die besagte Kopfplatte (15) substantiell senkrecht erhebt;
- ein freies Ende (21) an einem der besagten Kopfplatte (15) gegenüber liegenden Ende der besagten Stange (16), welches dazu ausgelegt ist, um in einer Nut (9) der besagten Nuten des Laufstegs (3) aufgenommen zu werden.

6. Ein Fahrzeug zum Transport von Paletten oder Körben mit einem Palettensockeln, umfassend:
- einen Rahmen eines Fahrzeugcontainer;
- eine Unterstützungsstruktur gemäß einem der Ansprüche 1 bis 4, wobei die Längsträger (4) der Unterstützungsstruktur an dem Rahmen des Fahrzeugcontainers eingehakt sind.

7. Das Fahrzeug gemäß Anspruch 6, umfassend eine elektrische Kontrollvorrichtung mit elektrischen Vorrichtungen, welche dafür ausgelegt sind:
- Kontaktpunkte zwischen einer Palette oder einem Korb (18) mit einem Palettensockel und der Plattform (1) der Unterstützungsstruktur zu detektieren, oder
- das Vorhandensein eines Querträgers (14) zu detektieren, der an einem Längsträger (4) der Unterstützungsstruktur angeschraubt ist.

8. Ein Verfahren zum Befestigen von Paletten oder von Körben auf Palettensockeln an dem Transportfahrzeug gemäß Anspruch 6 oder 7, umfassend folgende Schritte:
- Aufstellen wenigstens einer Palette oder eines Korbes (18) mit einer Palettenbasis (19) auf der Plattform (1) der besagten Unterstützungsstruktur des Fahrzeugs;
- Bereitstellen wenigstens eines Querträgers (14), der folgendes aufweist:
- eine Kopfplatte (15) mit Befestigungslöchern (17), die dazu ausgelegt ist, um an der Rückseite des C-förmigen Abschnittes der besagten Längsträger (4) der besagten Unterstützungsstruktur des Fahrzeugs anzustoßen, wobei die Befestigungslöcher (17), welche entsprechende Löcher der Mehrzahl von Löchern (11) der Längsträger überlagern, in einer Reihe angeordnet sind,
- eine Stange (16), die sich über die besagte Kopfplatte (15) substantiell senkrecht erhebt;
- ein freies Ende (21) an einem der besagten Kopfplatte (15) gegenüber liegenden Ende der besagten Stange (16), welches dazu ausgelegt ist, in einer Nut (9) der besagten Nuten des Laufstegs (3) der besagten Unterstützungsstruktur des Fahrzeugs aufgenommen zu werden;
- Einsetzen der Stange (16) wenigstens eines Querträgers (14) in die Palettenbasis (19), um Bewegungen der Palettenbasis (19) in Längsrichtung der Plattform (1) zu verhindern, Positionieren der Kopfplatte (15) gegen die Rückseite des C-Abschnittes eines Längsträgers (4) der besagten Längsträger derart, dass die Befestigungslöcher (17) des Querträgers entsprechende Löcher (11) des Längsträgers (4) überlagern, und dass ein freies Ende (21) des Querträgers (14) in einer Nut (9) des Laufstegs (3) der besagten Unterstützungsstruktur des Fahrzeugs aufgenommen ist;
- Anschrauben der Kopfplatte (15) gegen die Rückseite des C-Abschnittes des Längsträgers (4).

## Revendications

1. Structure de support comprenant :
une plateforme rigide (1) définissant une surface de support configurée pour supporter des palettes ou des paniers avec une embase pour palette;
un marchepied (3) rigide fixé longitudinalement à ladite plateforme (1) dans une position sensiblement centrale et divisant ladite surface de support en deux voies (2) séparées par le marchepied (3),
**caractérisée en ce que** :
ledit marchepied (3) est formé afin de définir deux rainures (9) sensiblement spéculaires par rapport à un plan longitudinal médian de la surface de support, chaque rainure (9) desdites rainures étant levée par rapport à une voie (2) respective desdites deux voies ;
deux longerons longitudinaux (4) fixés longitudinalement sur les côtés externes de ladite plateforme (1), dans laquelle chaque longeron longitudinal (4) desdits longerons longitudinaux a :
- une section sensiblement en forme de C appropriée pour s'accrocher à un châssis de véhicule, et
- une pluralité de trous (11) agencés dans une rangée sur un dos de ladite section en forme de C, lesdits trous (11) restant exposés sur les côtés dudit véhicule lorsque le longeron est accroché audit châssis de véhicule.

2. Structure de support selon la revendication 1, dans laquelle chaque longeron (4) desdits longerons a :
- un bord longitudinal plié afin de définir une base (12) appropriée pour supporter ladite plateforme (1), et
- un gradin qui définit une paroi de butée (13) pour ladite plateforme (1) afin d'empêcher les mouvements transversaux de la plateforme (1) lorsqu'elle est posée sur ladite base (12).

3. Structure de support selon l'une des revendications 1 et 2, dans laquelle ladite plateforme (1) comprend une pluralité de modules identiques (7) couplés entre eux, chaque module (7) de ladite pluralité de modules comprenant :
- une plaque (5) définissant des éléments complémentaires de verrouillage (8a, 8b) au niveau des bords opposés de la plaque (5), lesdits éléments complémentaires de verrouillage (8a, 8b) étant configurés pour se mettre en prise dans des éléments complémentaires de verrouillage (8a, 8b) d'une plaque (5) d'un module (7) adjacent,
- des longerons rigides (6) qui supportent ladite plaque (5).

4. Structure de support selon l'une des revendications 1 à 3, dans laquelle ledit marchepied (3) est boulonné sur la plateforme (1).

5. Système de fixation de palettes ou de paniers d'embase pour palette, comprenant :
une structure de support selon l'une des revendications 1 à 4 ;
au moins une traverse (14) ayant :
- une plaque de tête (15) avec des trous de fixation (17), configurée pour venir en butée contre le dos de la section en forme de C desdits longerons longitudinaux (4) avec les trous de fixation (17) superposés sur des trous correspondants de la pluralité de trous (11), des longerons longitudinaux agencés dans une rangée ;
- une tige (16) qui s'érige sensiblement perpendiculairement à partir de ladite plaque de tête (15) ;
- une extrémité libre (21) positionnée sur une extrémité de ladite tige (16) opposée à ladite plaque de tête (15) configurée pour être logée dans une rainure (9) desdites rainures du marchepied (3).

6. Véhicule pour transporter des palettes ou des paniers avec une embase pour palette, comprenant :
un châssis d'un conteneur de véhicule ;
une structure de support selon l'une des revendications 1 à 4, dans lequel les longerons longitudinaux (4) de la structure de support sont accrochés au châssis du conteneur de véhicule.

7. Véhicule selon la revendication 6, comprenant un appareil électrique de contrôle comprenant des dispositifs électriques configurés :
- pour détecter des points de contact entre une palette ou un panier (18) avec une embase pour palette (19) et la plateforme (1) de la structure de support, ou bien
- pour détecter la présence d'une traverse (14) boulonnée à un longeron longitudinal (4) de la structure de support.

8. Procédé pour fixer des palettes ou des paniers à base de palette sur le véhicule de transport selon la revendication 6 ou 7, comprenant les étapes suivantes :
placer au moins une palette ou panier (18) avec l'embase pour palette (19) sur la plateforme (1) de ladite structure de support de véhicule ;
prévoir au moins une traverse (14) ayant :
- une plaque de tête (15) avec des trous de fixation (17), configurée pour venir en butée contre le dos de la section en forme de C desdits longerons longitudinaux (4) de ladite structure de support de véhicule avec les trous de fixation (17) superposés sur des trous correspondants de la pluralité de trous (11), des longerons longitudinaux agencés dans une rangée,
- une tige (16) qui s'érige sensiblement perpendiculairement à partir de ladite plaque de tête (15),
- une extrémité libre (21) positionnée sur une extrémité de ladite tige (16) opposée à ladite plaque de tête (15), configurée pour être logée dans une rainure (9) desdites rainures du marchepied (3) de ladite structure de support de véhicule ;
insérer la tige (16) d'au moins une traverse (14) dans l'embase pour palette (19) afin d'empêcher les mouvements de l'embase pour palette (19) longitudinalement par rapport à la plateforme (1), positionner la plaque de tête (15) contre le dos de la section en forme de C d'un longeron longitudinal (4) desdits longerons longitudinaux, avec les trous de fixation (17) de la traverse superposés sur des trous (11) correspondants du longeron longitudinal (4), et avec une extrémité libre (21) de la traverse (14) logée dans une rainure (9) du marchepied (3) de ladite structure de support de véhicule ;
boulonner la plaque de tête (15) contre le dos de la section en forme de C du longeron longitudinal (4).
